# EUROPÄISCHE PATENTANMELDUNG

(11) **EP 2 647 971 A1**
(43) Veröffentlichungstag der Anmeldung: **09.10.2013**
(21) Anmeldenummer: 12163195.6
(22) Anmeldetag: 04.04.2012
(51) Int. Cl.: G01F 23/284

(54) **Füllstandmessgerät und Adapter mit Reflektor**

(71) Anmelder: VEGA Grieshaber KG, 77709 Wolfach (DE)
(72) Erfinder: Lenk, Fritz, 77761 Schiltach (DE); Benz, Joachim, 77756 Hausach (DE); Kienzle, Klaus, 77736 Zell a.H. (DE)
(74) Vertreter: Patentanwälte Westphal, Mussgnug & Partner

(57) **Zusammenfassung**

Füllstandmessgerät (1) mit einem Signalgenerator (5) für elektromagnetische Wellen und einem langgestreckten Hohlleiter (3) zur Führung der erzeugten elektromagnetischen Wellen, wobei an dem Hohlleiter (3) endseitig ein Reflektor (13) angeordnet ist.

## Beschreibung

Die vorliegende Erfindung betrifft den Bereich der Füllstandmesstechnik und insbesondere den Bereich der Füllstandmesstechnik mit Radar, wobei zur Füllstandmessung elektromagnetische Wellen, die von einem Hohlleiter geführt sind, verwendet werden.

Aus dem Stand der Technik sind Füllstandmessgeräte mit einem Signalgenerator zur Erzeugung von elektromagnetischen Wellen und einem langgestreckten Hohlleiter zur Führung der erzeugten elektromagnetischen Wellen bekannt. Derartige Füllstandmessgeräte werden in der Regel zur Füllstandmessung von Flüssigkeiten verwendet, wobei der Hohlleiter als zylindrisches Rohr ausgebildet ist, in das das Füllgut, d. h. insbesondere die Flüssigkeit, eindringt. An einer Grenzfläche des Füllmediums werden die ausgesendeten und in dem Hohlleiter geführten elektromagnetischen Wellen wenigstens teilweise reflektiert, so dass mit Hilfe einer Laufzeitmessung der Füllstand des Mediums innerhalb des Hohlleiters ermittelt werden kann.

Ein derartiges Füllstandmessgerät eignet sich besonders für Flüssigkeiten, beispielsweise Lösungsmittel oder Flüssiggase sowie Flüssigkeiten mit Schaumbildung sowie für Füllgüter mit niedriger dielektrischer Leitfähigkeit ε.

Bei den aus dem Stand der Technik bekannten Füllstandmessgeräten besteht das Problem, dass bei einem Füllstand nahe Null, d. h. wenn eine Reflexion des Messsignals im Bereich eines einem Behälterboden naheliegenden Endes des Hohlleiters erfolgt, ein Bodenecho, d. h. eine Reflexion der elektromagnetischen Welle an dem meist metallischen Boden des Behälters erfolgt, das Messsignal überdeckt, so dass keine Ermittlung des Füllstands mehr möglich ist.

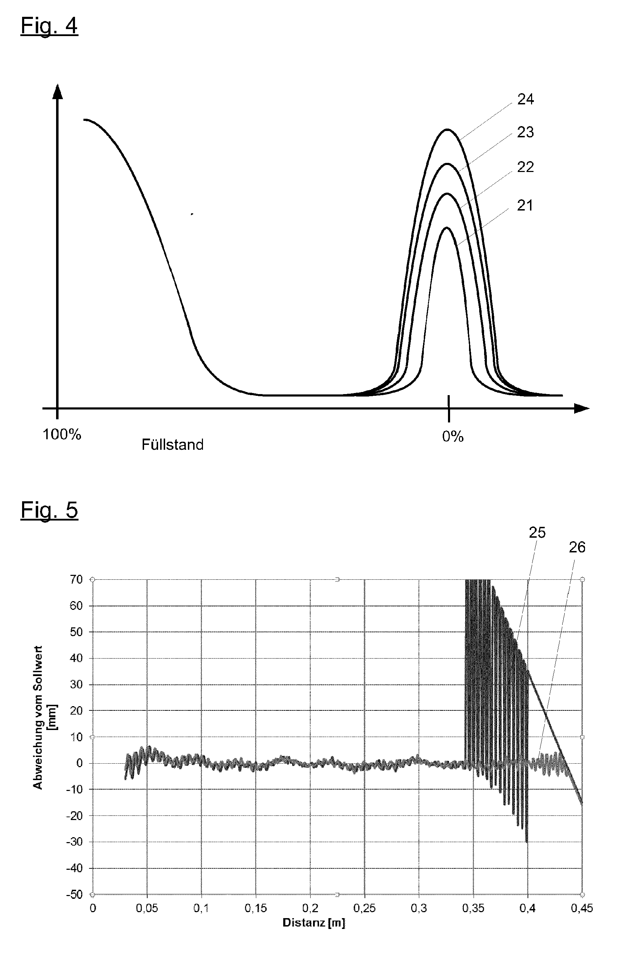

In Figur 4 ist mit 23 das reguläre Messsignal, d. h. die Reflexion der elektromagnetischen Welle an der Oberfläche des Mediums und mit 24 die Bodenreflexion bei einem Füllstandmessgerät gemäß dem Stand der Technik bei einem Füllstand von annähernd 0 % gezeigt. Wie Figur 4 entnommen werden kann, überdeckt die Bodenreflexion 24 das Messsignal 23 vollständig, so dass eine Detektion des Messsignals 23 nicht möglich ist.

In Figur 5 ist ein weiterer negativer Effekt aus dem Stand der Technik gezeigt, bei dem bei einem Füllstandmessgerät mit einem 45 cm langen Hohlleiter, der knapp über dem Boden eines Tanks montiert ist, im Bereich zwischen 34 cm und 40 cm Interferenzen zwischen dem Messsignal und der Bodenreflexion auftreten, so dass das detektierte Signal zu springen beginnt und damit auch deshalb eine sinnvolle Füllstandmessung nicht mehr möglich ist.

Es ist die Aufgabe der vorliegenden Erfindung, ein Füllstandmessgerät zur Verfügung zu stellen, das die Nachteile aus dem Stand der Technik nicht aufweist. Es ist ferner eine Aufgabe der vorliegenden Erfindung eine Möglichkeit zur Verfügung zu stellen, mit der die oben beschriebenen Nachteile bei Füllstandmessgeräten aus dem Stand der Technik beseitigt werden können.

Diese Aufgaben werden durch ein Füllstandmessgerät mit den Merkmalen des Patentanspruchs 1 sowie einen Adapter für ein Füllstandmessgerät mit den Merkmalen des Patentanspruchs 12 gelöst.

Ein erfindungsgemäßes Füllstandmessgerät weist einen Signalgenerator zur Erzeugung elektromagnetischer Wellen und einen langgestreckten Hohlleiter zur Führung der erzeugten elektromagnetischen Wellen auf, wobei an dem Hohlleiter endseitig ein Reflektor angeordnet ist. Das Vorsehen eines Reflektors im Sinne dieser Anmeldung bedeutet, die Anordnung einer reflektierenden Fläche in einem von der Längsachse des Hohlleiters abweichenden Winkel.

Durch das Vorsehen eines Reflektors, der bevorzugt plattenförmig ausgebildet ist und am Ende des Hohlleiters derart angeordnet ist , dass die erzeugten elektromagnetischen Wellen am Ende des Hohlleiters nicht weiter in Richtung eines Bodens eines Tanks, in dem ein Füllstand ermittelt werden soll, austreten, sondern von dem Reflektor seitlich von dem Hohlleiter weg reflektiert werden, wird erreicht, dass das Bodenecho zu einem großen Teil und im Idealfall annähernd vollständig ausgeblendet wird. Als verbleibendes Echo am Ende des Hohlleiters wird der Anteil der Reflexion, der von dem Reflektor in den Hohlleiter zurückgeworfen wird, detektiert werden. Dieser Anteil ist jedoch so reduziert, dass er eine geringere Amplitude als ein in diesem Bereich aufgenommenes Messsignal aufweist, so dass aufgrund des Reflektors auch im Endbereich des Hohlleiters eine Messwertermittlung stattfinden kann. Das seitlich, beispielsweise in Richtung einer Behälterwand reflektierte elektromagnetische Signal wird zwar weiterhin von dem Füllstandmessgerät erfasst, liegt aber aufgrund der erhöhten Laufzeit außerhalb des zulässigen Messbereiches und kann damit bei der Messwerterzeugung vollständig ausgeblendet werden.

Typischerweise ist der Hohlleiter als Rohr, bevorzugt als Zylinderrohr ausgebildet.

Es hat sich gezeigt, dass der Reflektor bevorzugt in einem Winkel kleiner als 75°, bevorzugt zwischen 35° und 55° zu der Längsachse des Hohlleiters ausgerichtet sein sollte. Besonders gute Ergebnisse werden bei einer Ausrichtung des Reflektors in einem Winkel von 45° zur Längsachse des Hohlleiters erreicht.

Bei einer Ausrichtung des Reflektors in einem Winkel von 45° zur Längsachse des Hohlleiters wird erreicht, dass ein relativ großer Anteil des elektromagnetischen Signals aus dem Bereich des Hohlleiters heraus reflektiert wird.

Grundsätzlich kann der an dem Hohlleiter angeordnete Reflektor aus jedem Material bestehen, das elektromagnetische Wellen wenigstens teilweise reflektiert. Mögliche Materialien sind dementsprechend Kunststoffe mit einer erhöhten Dielektrizitätszahl sowie bevorzugt Metalle.

Eine bevorzugte Ausgestaltung des Reflektors sieht vor, dass der Reflektor wenigstens teilweise metallisch, bevorzugt wenigstens auf einer dem Hohlleiter zugewandten Oberfläche metallisiert, beispielsweise bedampft oder bedruckt ist.

Eine mechanisch und chemisch besonders widerstandsfähige Variante des Reflektors wird erreicht, wenn der Reflektor aus einem Blech, bevorzugt aus einem Stahlblech aus einem chemischen inerten Stahl, beispielsweise aus einem Edelstahl gefertigt ist.

Bei einer derartigen Ausgestaltung des Reflektors kann außerdem bei einer Ausbildung des Hohlleiters ebenfalls aus einem Stahl durch Verschweißen besonders einfach eine Verbindung zwischen dem Reflektor und dem Hohlleiter hergestellt werden.

Eine besonders einfache Variante zur Herstellung dieser Verbindung ist durch eine Anordnung des Reflektors und einer Außenwandung des Hohlleiters gegeben. Neben der Möglichkeit, den Reflektor mit dem Hohlleiter zu verschweißen besteht, insbesondere bei anderen Materialien, auch die Möglichkeit den Reflektor und den Hohlleiter miteinander zu verkleben oder eine andere mechanische Verbindung herzustellen.

Eine Erhöhung der mechanischen Stabilität der Anordnung kann erreicht werden, wenn der Reflektor mit dem Hohlleiter nicht nur punktförmig, sondern an einem linienförmigen Abschnitt der Außenwandung des Hohlleiters verbunden ist. Auf diese Weise kann vermieden werden, dass der Reflektor bei mechanischer Beanspruchung allzu leicht von dem Hohlleiter getrennt wird, z.B. abbricht.

Eine solche linienförmige Befestigung des Reflektors an dem Hohlleiter kann beispielsweise dadurch erreicht werden, dass der Hohlleiter in dem Abschnitt der Außenwandung, an dem der Reflektor befestigt ist, in dem Winkel abgelängt ist, in dem der Reflektor ausgerichtet ist.

Auf diese Weise wird am Ende des Hohlleiters eine Stirnfläche der Außenwandung geschaffen, die entsprechend der Ausrichtung des Reflektors ausgerichtet ist. Der Reflektor kann damit über die komplette Stirnfläche in diesem Bereich mit dem Hohlleiter verbunden werden.

Der Reflektor ist bevorzugt derart an dem Hohlleiter angeordnet, dass ein Schnittpunkt der Längsachse des Hohlleiters, das bedeutet im Zusammenhang mit der vorliegenden Anmeldung einer Symmetrieachse des Hohlleiters, insbesondere einer Rotationsachse des Hohlleiters mit dem Reflektor vor dem Hohlleiter angeordnet ist. Eine Anordnung des Schnittpunktes vor dem Hohlleiter bedeutet, dass dieser Schnittpunkt insbesondere nicht innerhalb des Hohlleiters liegt, sondern wenigstens auf einer auf Höhe des Endes des Hohlleiters senkrecht zur Längsachse des Hohlleiters ausgerichteten Ebene liegt.

Bei einer Ausrichtung des Reflektors in einem Winkel von 45° zu der Längsachse des Hohlleiters bedeutet dies, dass wenigstens 50 % der Fläche des Reflektors derart angeordnet sind, dass einstrahlende elektromagnetische Wellen in einen Bereich außerhalb des Hohlleiters reflektiert werden.

Bevorzugt ist der Reflektor derart angeordnet, dass er eine Stirnfläche des Hohlleiters zu höchstens 50 % verschließt. Bevorzugt verschließt der Reflektor die Stirnfläche des Hohlleiters zu höchstens 30 % und weiter bevorzugt nicht.

Ein Verschließen der Stirnfläche des Hohlleiters bedeutet im Zusammenhang mit dieser Anmeldung, dass der Reflektor durch seine Anbringung eine imaginäre Stirnfläche, die senkrecht zur Längsachse des Hohlleiters liegt um den angegebenen Anteil reduziert, d. h. dass der entsprechende Anteil der Stirnfläche entfällt und in diesem Bereich der Reflektor angeordnet ist.

Besonders gute Ergebnisse werden erzielt, wenn ein Normalenvektor des Reflektors in einer Schwingungsebene des magnetischen Feldes der abgestrahlten elektromagnetischen Wellen liegt.

Bei den abgestrahlten elektromagnetischen Wellen handelt es sich um sogenannte TEM-Wellen, bei denen die elektrische und die magnetische Komponente paarweise orthogonal zur Ausbreitungsrichtung der elektromagnetischen Welle sind. Im Vergleich zu Anordnungen, bei denen der Normalenvektor anders orientiert ist, wurden so Verbesserungen von 4 bis 6 dB erreicht.

Eine Verbesserung von Füllstandsmessgeräten aus dem Stand der Technik, die nach dem Prinzip der Hohlleiter geführten elektromagnetischen Welle arbeiten, kann durch einen Adapter erreicht werden, der einen Befestigungsabschnitt zur endseitigen Befestigung des Adapters an einem langgestreckten Hohlleiter des Füllstandsmessgerätes aufweist, wobei ein Reflektor vorgesehen ist. Die oben genannte Definition für die Anbringung eines Reflektors gilt auch für den erfindungsgemäßen Adapter.

Der Befestigungsabschnitt ist bevorzugt korrespondierend zu dem Hohlleiter ausgebildet, sodass der Adapter auf den Hohlleiter beispielsweise aufgesteckt und mit diesem durch Verschweißen oder Verkleben oder durch mechanisches Verklemmen verbunden werden kann.

Für zylindrisch ausgebildete Hohlleiter ist es bevorzugt, wenn der Befestigungsabschnitt des Adapters zylindrisch ausgebildet ist. Auf diese Weise kann der Adapter in einer günstigen Orientierung für den jeweiligen Einsatzzweck an dem Hohlleiter angeordnet werden. Beispielsweise ist es so möglich, den Adapter derart auszurichten, dass von dem Reflektor reflektierte Wellen eine möglichst weite Strecke zur nächsten Behälterwand zurückzulegen haben. Es ist aber auch möglich, wie bereits oben dargestellt, den Adapter geeignet zu den Schwingungsebenen der elektrischen und der magnetischen Komponente des elektromagnetischen Feldes auszurichten, sodass eine besonders gute Unterdrückung von Reflektionen stattfindet. Eine Ausrichtung in Richtung einer weit entfernten Behälterwand kann dann beispielsweise durch eine entsprechende Anordnung des Füllstandmessgerätes in dem Behälter erreicht werden.

Eine besonders günstige Herstellung eines erfindungsgemäßen Adapters kann erreicht werden, wenn dieser beispielsweise aus Kunststoff gefertigt wird. Bevorzugt ist der Adapter jedoch wenigstens teilweise metallisch, beispielsweise wenigstens im Bereich des Reflektors oberflächlich metallisiert.

Eine besonders stabile Ausgestaltung des Adapters kann erreicht werden, wenn dieser aus einem Blech, bevorzugt einem Stahlblech gefertigt ist. Insbesondere bei der Fertigung des Adapters aus einem Stahlblech kann besonders einfach eine stabile mechanische Verbindung des Adapters mit einem Hohlleiter der ebenfalls aus Stahl gefertigt ist, beispielsweise durch Verschweißen hergestellt werden. Grundsätzlich ist aber auch eine Verklebung oder eine andere mechanische Verbindung der Komponenten möglich.

Der Reflektor ist an dem Adapter bevorzugt in einem Winkel kleiner als 75°, zwischen 35° und 55°, zu der Längsachse des Befestigungsabschnittes ausgerichtet. Besonders gute Ergebnisse wurden bei einem Winkel von 45° erreicht. Durch eine derartige Ausrichtung des Reflektors relativ zu dem Befestigungsabschnitt des Adapters wird erreicht, dass bei einem Aufstecken des Adapters auf den Hohlleiter eines Füllstandmessgerätes eine Ausrichtung des Reflektors relativ zu dem Hohlleiter des Füllstandmessgerätes erreicht wird.

Der Reflektor ist bevorzugt an einer Außenwandung des Befestigungsabschnittes des Adapters befestigt. Die Befestigung erfolgt bevorzugt in einem linienförmigen Abschnitt, da auf diese Weise eine besonders stabile Verbindung erreicht werden kann.

Um die Stabilität der Befestigung des Reflektors an dem Befestigungsabschnitt weiter zu erhöhen, ist der Befestigungsabschnitt in dem Abschnitt der Außenwandung, an dem der Reflektor befestigt ist, in dem Winkel abgelängt, in dem der Reflektor ausgerichtet ist.

Ein Schnittpunkt der Längsachse des Befestigungsabschnittes mit dem Reflektor liegt bevorzugt vor dem Befestigungsabschnitt, da auf diese Weise erreicht wird, dass bei der bevorzugten Ausrichtung des Reflektors in einem Winkel von 45° zur Längsachse des Befestigungsabschnitts wenigstens 50% der einstrahlenden elektromagnetischen Wellen in einem Bereich außerhalb des Befestigungsabschnittes bzw. des Hohlleiters reflektiert werden.

Versuche haben gezeigt, dass besonders gute Ergebnisse erzielt werden, wenn der Reflektor derart angeordnet ist, dass er eine Stirnfläche des Befestigungsabschnittes zu höchstens 50% verschließt. Besonders gute Ergebnisse werden erreicht, wenn der Reflektor die Stirnfläche zu höchstens 33 % und weiter bevorzugt nicht verschließt.

Die oben angegebenen Definitionen bezüglich der Anordnung des Schnittpunktes des Reflektors mit der Längsachse des Hohlleiters sowie betreffend das Verschließen der Stirnfläche des Hohlleiters sind mutatis mutandis auf den Adapter anzuwenden.

Die Erfindung wird nachfolgend anhand von drei Ausführungsbeispielen unter Bezugnahme auf die beigefügten Figuren eingehend erläutert. Es zeigen:
- Figur 1: ein erfindungsgemäßes Füllstandmessgerät mit einem erfindungsgemäßen Adapter in einer ersten Ausführungsform,
- Figur 2: ein Standrohr eines Füllstandmessgerätes mit einem erfindungsgemäßen Adapter in einer ersten Ausführung,
- Figur 3: ein Füllstandmessgerät mit einem erfindungsgemäße Adapter gemäß einer dritten Ausführung,
- Figur 4: schematisch dargestellte Echokurven und
- Figur 5: ein Vergleich der Abweichungen eines Messwertes vom tatsächlichen Füllstand bei Füllstandmessgeräten gemäß dem Stand der Technik sowie der vorliegenden Erfindung.

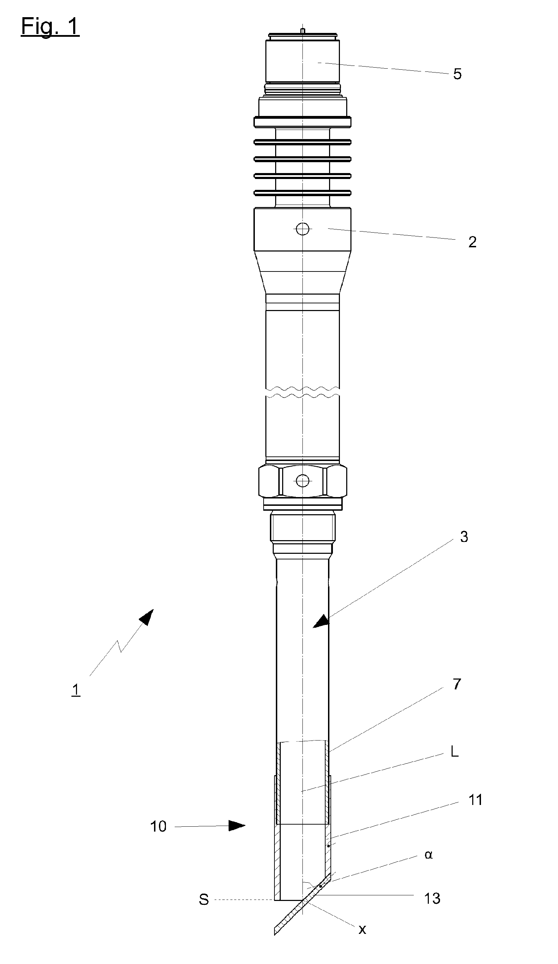

Figur 1 zeigt ein Füllstandmessgerät 1, das nach dem Radarprinzip arbeitet.

Das Füllstandmessgerät 1 weist in einem rückseitigen Bereich hinter einem Wellenanpasser 5 einen Signalgenerator sowie eine Auswerteelektronik auf, die vorliegend nicht dargestellt sind. Der Signalgenerator ist geeignet ausgebildet, elektromagnetische Wellenpakete in einer Länge von etwa 1 ns sowie einer Frequenz von etwa 26 GHz auszusenden. Weitere typische, für die Füllstandmessung eingesetzte Frequenzen liegen bei 5.8-6.3, 10, 24 - 27 oder 75 - 83 GHz.

Die elektromagnetischen Wellen werden über den Wellenanpasser 5 in einen Hohlleiter 3 eingekoppelt, der auch als Standrohr bezeichnet wird. Die elektromagnetische Wellen werden in dem Hohlleiter 3 in Richtung des Füllguts geführt und an einer Grenzefläche zwischen einem Füllgut und dem darüber befindlichen Medium, insbesondere Luft oder einem anderen Gas, reflektiert. Aus einer Messung einer Laufzeit der elektromagnetischen Wellenpakete kann dann ein Füllstand innerhalb eines Behälters errechnet werden. Zusätzlich zu Reflektionen an der Grenzfläche, d.h. der Oberfläche des Füllgutes, werden auch Reflexionen am Ende des Hohlleiters sowie am Behälterboden hervorgerufen. Im Stand der Technik führen insbesondere die Bodenreflektoren dazu, dass bei bodennah montierten Rohrantennen eine Messung im Endbereich des Hohlleiters 3 nicht mehr möglich ist, da das Bodenecho mit seiner extrem hohen Amplitude ein Messsignal, das von der Oberfläche des Messguts erzeugt wird, vollständig überlagert. Auf die entsprechenden Effekte wird zu einem späteren Zeitpunkt noch näher eingegangen.

Das erfindungsgemäße Füllstandmessgerät weist weiter einen Adapter 10 auf, an dem vorderseitig ein Reflektor 13 angeordnet ist. Der Reflektor 13 kann alternativ zur Befestigung an einen Adapter 10 auch direkt an dem Hohlleiter 3 angeordnet sein.

Der Reflektor 13 ist relativ zu einer Längsachse L des Hohlleiters 3, die im vorliegenden Ausführungsbeispiel der Rotationsachse des zylindrisch ausgebildeten Hohlleiters 3 entspricht, um einen Winkel α geneigt. Der Winkel α ist im vorliegenden Ausführungsbeispiel, das auch besonders gute Ergebnisse liefert, mit 45° gewählt, kann aber auch von diesem Wert abweichen.

Der im vorliegenden Ausführungsbeispiel gezeigte Reflektor 13 ist im Wesentlichen plattenförmig ausgebildet und in seiner Größe derart dimensioniert, dass er wenigstens die Fläche der Projektion eines Querschnitts des Hohlleiters 3 auf eine entsprechend dem Winkel α geneigte Fläche aufweist. Auf diese Weise wird erreicht, dass sämtliche elektromagnetischen Wellen, die aus dem Hohlleiter vorderseitig austreten durch den Reflektor 13 erfasst und entsprechend der anzuwendenden Reflexionsgesetze reflektiert werden.

Im vorliegenden Ausführungsbeispiel schneidet der Reflektor 13 eine Stirnfläche S des Hohlleiters in ihrem Durchmesser, sodass 50 % der Stirnfläche S von dem Reflektor 13 verschlossen sind und im Bereich der übrigen 50% zwischen der Stirnfläche S und dem Reflektor 13 eine seitliche Öffnung entsteht. Der Anteil der elektromagnetischen Wellen, die aus dem Hohlleiter 3 heraus seitlich wegreflektiert werden, hängt im Wesentlichen vom Winkel α des Reflektors 13 sowie von der Größe der seitlich entstehenden Öffnung ab. Der Reflektor 13 ist, wie im vorliegenden Ausführungsbeispiel dargestellt, an einer Außenwandung eines Befestigungsabschnitts 11 des Adapters 10 befestigt. Der Befestigungsabschnitt 10 ist korrespondierend zu dem Hohlleiter 3 zylindrisch ausgeformt und über einen Außenumfang des Hohlleiters 3 geschoben und mit diesem beispielsweise durch Verkleben oder Verschweißen verbunden.

Der Reflektor 13 ist an dem Befestigungsabschnitt 11 ebenfalls angeschweißt. Im vorliegenden Ausführungsbeispiel ist der Befestigungsabschnitt 11 vorderseitig in einem Winkel von 45° abgelängt, sodass sich eine im Winkel von 45° geneigte Anlagefläche für den Reflektor 13 ergibt, an welcher der Reflektor 13 ebenfalls angeschweißt ist.

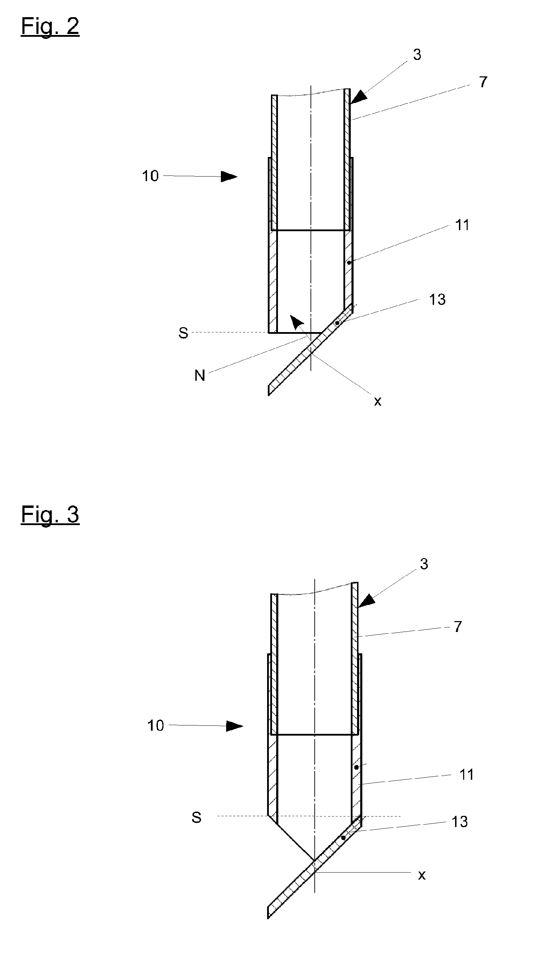

In den Figuren 2 und 3 sind zwei weitere Ausführungsbeispiele von erfindungsgemäßen Adaptern 10 gezeigt, wobei der Reflektor 13 die Stirnfläche S gemäß dem Ausführungsbeispiel in Figur 2 nur zu 33 % und gemäß dem Ausführungsbeispiel in Figur 3 nicht verschließt. In anderen Worten ausgedrückt ist ein Schnittlinie der Stirnfläche S des Hohlleiters 3 respektive des Adapters 10 und des Reflektors 13 um 33 % des Durchmessers der Stirnfläche S in Richtung deren Mittelpunkt verschoben. Bei dem Ausführungsbeispiel gemäß Figur 3 ist der Reflektor 13 unmittelbar an einer Umfangslinie der Stirnfläche S angeordnet und lediglich zur mechanischen Stabilisierung durch eine Verlängerung des Adapters 10 respektive des Hohlleiters 3 abgestützt. Von der Stirnfläche S ausgesehen liegt damit ein Schnittpunkt x zwischen dem Reflektor 13 und der Längsachse L des Hohlleiters 3 bzw. des Adapters 10 immer vor der Stirnfläche S.

Besonders gute Ergebnisse wurden erzielt, wenn ein Normalenvektor N des Reflektors 13 in der Schwingungsebene des magnetischen Anteils der abgestrahlten elektromagnetischen Wellen liegt. Um dies gewährleisten zu können, ist natürlich Voraussetzung, dass es sich bei den abgestrahlten elektromagnetischen Wellen um sogenannte TEM-Wellen, d. h. linear polarisiert elektromagnetische Wellen handelt, bei denen das elektrische und das magnetische Feld der elektromagnetischen Welle senkrecht zueinander stehen und in Ausbreitungsrichtung verschwinden.

Figur 4 zeigt eine schematische Darstellung von Echokurven bei einem Füllstand von 0 %, d. h. wenn der Füllstand im Bereich des offenen Endes des Hohlleiters 3 ist. Kurve 21 zeigt das Echo, welches am offenen Ende eines Hohlleiters 3 gemäß des Stands der Technik entsteht, wenn dieser in den freien Raum, d. h. nicht in einem Behälter oder Tank strahlt.

Kurve 22 zeigt das Echo, das bei Verwendung eines erfindungsgemäßen Füllstandmessgerätes bzw. bei Verwendung eines Füllstandmessgerätes mit einem erfindungsgemäßen Adapter erzeugt wird.

Kurve 23 zeigt das Echo eines Mediums mit kleiner Dielektrizitätszahl (beispielsweise ε < 2,5) wie dies beispielsweise bei Ölen der Fall ist.

Kurve 24 zeigt das Echo, das an einem Behälterboden entsteht, wenn der Hohlleiter 3 bis in einem Bereich nahe des Behälterbodens montiert ist und kein Reflektor gemäß der vorliegenden Erfindung vorgesehen ist.

Wie Figur 4 leicht entnommen werden kann, überlagert das Bodenecho (Kurve 24) das von dem Medium erzeugte Messsignal (Kurve 23) vollständig, sodass bei einem Füllstand von annähernd 0 % keine vernünftigen Messungen des Füllstandes mehr möglich sind.

Durch die erfindungsgemäße Maßnahmen wird erreicht, dass die elektromagnetischen Wellen nicht auf den Behälterboden auftreffen, sondern seitlich abgelenkt werden und damit das Bodenecho (Kurve 24) vermieden und lediglich das an dem Reflektor entstehenden Echo (Kurve 22) entsteht. Die Amplitude des Messsignals (Kurve 23) ist in diesem Bereich aber deutlich größer als die Amplitude des von dem Reflektor erzeugten Signals (Kurve 22), sodass im Vergleich zum Stand der Technik Messungen bis zu einem Füllstand von annähernd 0 % durchgeführt werden können.

Figur 5 zeigt zwei Fehlerkurven für Füllstandmessgeräte mit einem 45 cm langen Hohlleiter. Aufgetragen ist der Messfehler in mm gegenüber dem Abstand der Oberfläche des Mediums vom Anfang des Hohlleiters 3, d.h. der freiliegende Teil des Hohlleiters 3.

Kurve 25 zeigt den Messfehler bei einem Füllstandmessgerät 1 gemäß dem Stand der Technik und Kurve 26 zeigt den Messfehler bei einem erfindungsgemäßen Füllstandmessgerät.

Wie Figur 5 zweifelsfrei entnommen werden kann, bewegt sich der Messfehler bei beiden Messgeräten im Bereich von 0 bis 34 cm im Bereich von + / - 5 mm. Auf Grund des entstehenden Bodenechos 24 beginnt der Messfehler bei dem Füllstandmessgerät gemäß dem Stand der Technik ab einem Wert von 34 cm auf Grund von Interferenzen heftig zu springen, sodass ab einem Wert von 34 cm keine Messwerte mehr ermittelt werden können.

Bei dem Füllstandmessgerät gemäß der vorliegenden Erfindung ist zu erkennen, dass der Messfehler auch über 34 cm hinaus bis zu einem Wert von 44 cm weiterhin im Bereich von + / - 5 mm liegt. Mit einem Adapter 10 gemäß der vorliegenden Erfindung bzw. mit einem Füllstandmessgerät mit einem erfindungsgemäßen Reflektor 13 können damit Messungen bis ans Ende des verwendeten Hohlleiters 10 durchgeführt werden.

### Bezugszeichenliste

- 1: Füllstandmessgerät
- 2: Antenne
- 3: Hohlleiter / Standrohr
- 5: Wellenanpasser
- 7: Außenwandung
- 10: Adapter
- 11: Befestigungsabschnitt
- 13: Reflektor
- 21: Reflexion offenes Rohr
- 22: Reflexion mit Reflektor
- 23: Messsignal
- 24: Bodenreflexion ohne Reflektor
- 25: Fehler SdT
- 26: Fehler Erf

- α: Winkel
- N: Normalenvektor
- S: Stirnfläche
- L: Längsachse
- x: Schnittpunkt

## Patentansprüche

1. Füllstandmessgerät (1) mit einem Signalgenerator für elektromagnetische Wellen und einem langgestreckten Hohlleiter (3) zur Führung der erzeugten elektromagnetischen Wellen,
**dadurch gekennzeichnet, dass** an dem Hohlleiter (3) endseitig ein Reflektor (13) angeordnet ist.

2. Füllstandmessgerät (1) nach einem der vorhergehenden Ansprüche,
**dadurch gekennzeichnet, dass** der Hohlleiter (3) als Rohr, bevorzugt als Zylinderrohr, ausgebildet ist.

3. Füllstandmessgerät (1) nach einem der vorhergehenden Ansprüche,
**dadurch gekennzeichnet, dass** der Reflektor (13) in einem vorgegebenen Winkel (α) kleiner als 75°, bevorzugt zwischen 35° und 55°, bevorzugt 45°, zu einer Längsachse (L) des Hohlleiters (3) ausgerichtet ist.

4. Füllstandmessgerät (1) nach einem der vorhergehenden Ansprüche,
**dadurch gekennzeichnet, dass** der Reflektor (13) wenigstens teilweise metallisch ist.

5. Füllstandmessgerät (1) nach einem der vorhergehenden Ansprüche,
**dadurch gekennzeichnet, dass** der Reflektor (13) aus einem Blech, bevorzugt aus einem Stahlblech gefertigt ist.

6. Füllstandmessgerät (1) nach einem der vorhergehenden Ansprüche,
**dadurch gekennzeichnet, dass** der Reflektor (13) an einer Außenwandung (7) des Hohlleiters (3) angeordnet ist.

7. Füllstandmessgerät (1) nach Anspruch 6,
**dadurch gekennzeichnet, dass** der Reflektor (13) an einem linienförmigen Abschnitt der Außenwandung (7) des Hohlleiters (3) befestigt ist.

8. Füllstandmessgerät (1) nach Anspruch 7,
**dadurch gekennzeichnet, dass** der Hohlleiter (3) in dem Abschnitt der Außenwandung (7), an dem der Reflektor (13) befestigt ist, in dem Winkel (α) abgelängt ist, in dem der Reflektor (13) ausgerichtet ist.

9. Füllstandmessgerät (1) nach einem der vorhergehenden Ansprüche,
**dadurch gekennzeichnet, dass** ein Schnittpunkt der Längsachse (L) des Hohlleiters (3) mit dem Reflektor (13) vor dem Hohlleiter (3) angeordnet ist.

10. Füllstandmessgerät (1) nach einem der vorhergehenden Ansprüche,
**dadurch gekennzeichnet, dass** der Reflektor (13) derart angeordnet ist, dass er eine Stirnfläche des Hohlleiters (3) zu höchstens 50% verschließt, bevorzugt zu höchstens 33% und weiter bevorzugt 0% verschließt.

11. Füllstandmessgerät (1) nach einem der vorhergehenden Ansprüche,
**dadurch gekennzeichnet, dass** ein Normalenvektor des Reflektors (13) in einer Schwingungsebene des magnetischen Feldes der abgestrahlten elektromagnetischen Welle liegt.

12. Adapter (10) für ein Füllstandmessgerät (1), das nach dem Prinzip der hohlleitergeführten elektromagnetische Welle arbeitet,
**dadurch gekennzeichnet, dass** der Adapter (10) einen Befestigungsabschnitt (11) zur endseitigen Befestigung des Adapters (10) an einem langgestreckten Hohlleiter (3) des Füllstandmessgerätes (1) aufweist,
ein Reflektor (13) vorgesehen ist und
der Reflektor (13) in einem vorgegebenen Winkel (α) kleiner als 75° zu einer Längsachse (L) des Befestigungsabschnitts (11) angeordnet ist.

13. Adapter (10) nach Anspruch 12,
**dadurch gekennzeichnet, dass** der Befestigungsabschnitt (11) zylindrisch ausgebildet ist.

14. Adapter (10) nach einem der Ansprüche 12 oder 13,
**dadurch gekennzeichnet, dass** der Adapter (10) wenigstens teilweise metallisch, bevorzugt aus einem Blech, insbesondere einem Stahlblech, gefertigt ist.

15. Adapter (10) nach einem der Ansprüche 12 bis 14,
**dadurch gekennzeichnet, dass** der Reflektor (13) in einem Winkel(α) zwischen 35° und 55°, bevorzugt 45°, zu der Längsachse (L) des Befestigungsabschnitts (11) ausgerichtet ist.

16. Adapter (10) nach einem der Ansprüche 12 bis 15,
**dadurch gekennzeichnet, dass** der Reflektor (13) an einer Außenwandung (7) des Befestigungsabschnitts (11) angeordnet ist.

17. Adapter (10) nach einem der Ansprüche 12 bis 16,
**dadurch gekennzeichnet, dass** der Reflektor (13) an einem linienförmigen Abschnitt der Außenwandung (7) des Befestigungsabschnittes (11) befestigt ist.

18. Adapter (10) nach einem der Ansprüche 12 bis 17,
**dadurch gekennzeichnet, dass** der Befestigungsabschnitt (11) in dem Abschnitt der Außenwandung (7), an dem der Reflektor (13) befestigt ist, in dem Winkel (α) abgelängt ist, in dem der Reflektor (13) ausgerichtet ist.

19. Adapter (10) nach einem der Ansprüche 12 bis 18,
**dadurch gekennzeichnet, dass** ein Schnittpunkt der Längsachse (L) des Befestigungsabschnittes (11) mit dem Reflektor (13) vor dem Befestigungsabschnitt (11) angeordnet ist.

20. Adapter (10) nach einem der vorhergehenden Ansprüche,
**dadurch gekennzeichnet, dass** der Reflektor (13) derart angeordnet ist, dass er eine Stirnfläche des Hohlleiters (3) zu höchstens 50% verschließt, bevorzugt zu höchstens 33% und weiter bevorzugt 0% verschließt.
